# EUROPEAN PATENT SPECIFICATION

(11) **EP 3 257 311 B1**
(45) Date of publication and mention of the grant of the patent: **08.07.2020**
(21) Application number: 15881460.8
(22) Date of filing: 09.02.2015
(51) Int. Cl.: H04W 72/12

(54) **METHOD AND APPARATUS FOR REDUCING PROCESSING DELAY**
VERFAHREN UND VORRICHTUNG ZUR REDUZIERUNG VON VERARBEITUNGSVERZÖGERUNG
PROCÉDÉ ET APPAREIL POUR RÉDUIRE LE TEMPS DE TRAITEMENT

(43) Date of publication of application: 20.12.2017
(73) Proprietor: Telefonaktiebolaget LM Ericsson (publ), 164 83 Stockholm (SE)
(72) Inventor: WANG, Jianfeng, Beijing 100102 (CN); ZHU, Huaisong, Beijing 100102 (CN); XIAO, Lei, Beijing 100083 (CN)
(74) Representative: Zacco Sweden AB
(86) International application number: PCT/CN2015/072578
(87) International publication number: WO 2016/127298

(56) References cited:
- WO-A1-2007/022441
- WO-A1-2014/061432
- WO-A2-2007/149166
- CN-A- 104 168 656
- US-A- 6 078 821
- US-A1- 2008 056 192
- US-A1- 2008 318 630
- US-A1- 2011 176 464
- US-A1- 2013 170 442

## Description

### TECHNICAL FIELD

The non-limiting and exemplary embodiments of the present disclosure generally relate to the technical field of wireless communications, and specifically to a method and apparatus for reducing processing delay.

### BACKGROUND

This section introduces aspects that may facilitate a better understanding of the disclosure. Accordingly, the statements of this section are to be read in this light and are not to be understood as admissions about what is in the prior art or what is not in the prior art.

Both capacity and cell edge user throughput are very important requirements from the system performance viewpoint in a wireless system. The capacity corresponds to the average cell spectrum efficiency, while the cell edge user throughput may be defined as, for example, the 5 percent value in the cumulative distribution function (CDF) of the user throughput. Coordinated Multi-Point (COMP) is an advanced technology for providing a significant gain in terms of both the capacity and the cell edge user throughput.

COMP has been adopted as a key technique for Long Term Evolution-Advanced (LTE-A) which is developed by the third generation project group (3GPP) with a target of satisfying the increasing future traffic demand. COMP can be exploited in both transmission and reception. For example, Uplink Coordinated Multi-Point Joint Reception (UL CoMP-JR) can offer increased terminal device signal receiving power and good interference suppression of one or several interferers, and has been introduced to LTE to improve the coverage of high data rate service, cell-edge throughput and/or to increase system throughput.

UL CoMP-JR operation targets at many different deployments, including coordination between sites and sectors in cellular macro deployments, as well as various configurations of Heterogeneous deployments, where for instance a macro-node coordinates the transmission with pico-nodes within the macro coverage area.

The concept of a "point" is heavily used in conjunction with the technique of COMP. In this context, a point corresponds to a set of antennas covering essentially the same geographical area in a similar manner. Thus, a point might correspond to one of the sectors at a site, but it may also correspond to a site having one or more antennas all intending to cover a similar geographical area. In general, different points may represent different sites. Multiple antennas correspond to different points if they are sufficiently geographically separated and/or their antenna diagrams point to sufficiently different directions.

The techniques for UL CoMP entail introducing dependencies in the uplink reception among different points, in contrast to conventional cellular systems where a point from a receiver point of view is operated more or less independently from the other points.

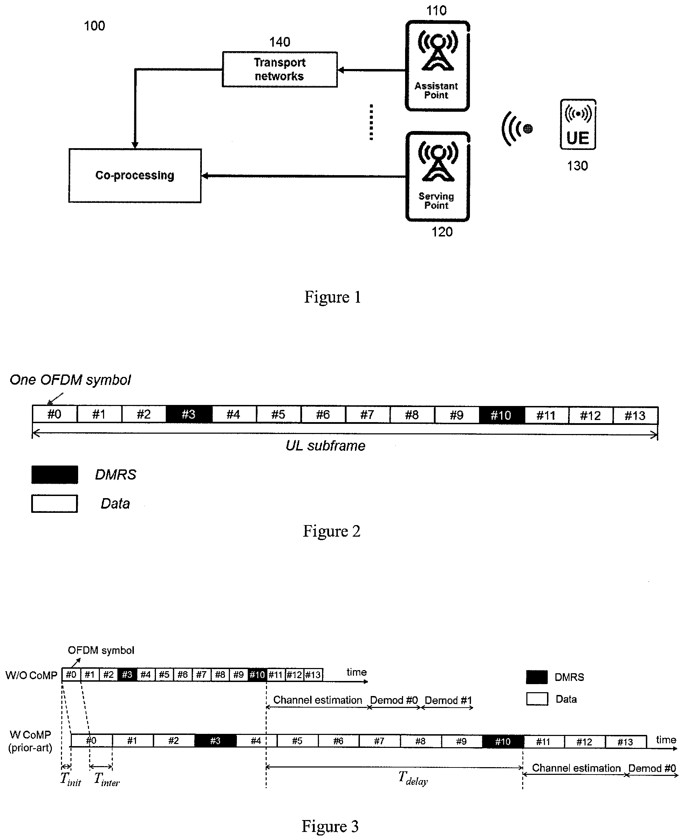

The UL CoMP operations can be schematically illustrated in FIG. 1, where a certain terminal device, for example user equipment (UE) 130, is served by multiple points, e.g., a serving point 120 and an assistant point 110, which receive the uplink signals from the UE. The signals received by the assistant points 110 from the UE 130 are transmitted to the serving point 120 via a transport network 140, which can be but not limited to an Ethernet. After that, the data from all points can be jointly processed at the serving point to obtain the UL CoMP gain.

As indicated below, prior art is known in the field. WO2007/149166 A2 discloses a method (600) for communicating data with message content over a network to provide Quality of Service. The method (600) includes receiving data over a network, prioritizing the data, and communicating the data based at least in part on the priority. The step of prioritizing the data includes differentiating the data based at least in part on message content. Certain embodiments of the present invention provide a system (500) for communicating data including a data prioritization component (560, 700) and a data communications component (580). The data prioritization component (560, 700) is adapted to prioritize data. The data prioritization component (560, 700) includes a differentiation component (562, 710). The differentiation component (562, 710) is adapted to differentiate the data based at least in part on message content. The data communications component (580) is adapted to communicate the data based at least in part on the priority. Furthermore, WO2007/022441 A1 is directed to packet scheduling techniques for prioritizing packets in the first generation (IX) evolution data optimized (EV-DO) network or similar networks that do not provide quality of service (QoS) support at the media access control (MAC) level. The techniques make use of a plurality of prioritized queues that are organized into packet flows. The different packet flows associate packets having similar or identical radio link protocols (RLPs) in order to achieve the necessary error detection for such related packets. The different queues define packet priorities base on packet type, in order to give transmission priority to certain types of packets over other types of packets. By separating the packets into different prioritized queues and associating several queues into common packet flows, prioritization can be achieved along with an efficient implementation of different error detection schemes. Moreover, US2008/318630 A1 discloses techniques for graceful coexistence of modules supporting multiple communication protocols. Graceful coexistence may be achieved by giving priority to a communication protocol having high priority data to send or receive. In one design, the priority of data to send via a wireless channel by a first module for a first communication protocol (e.g., IEEE 802.11) may be determined, e.g., based on data type, one or more data protocol header fields, an application originating the data, etc. Whether to send the data without delay may be decided based on the priority of the data. A second module for a second communication protocol (e.g., Bluetooth) may be requested to not transmit on the wireless channel in response to a decision to send the data without delay. The data may be sent via the wireless channel upon receiving an indication that the wireless channel is not occupied by the second module. Furthermore, prior art is known in the field, for example, US2011/0176464 A, which relates to a method and system for establishing a highly mobile, long range secure wireless network with dynamic topologies and near full connectivity with acceptable latency using low cost, low power, compact and lightweight devices and US 6078821 A, which relates to a cordless radio telephone system and more particularly to a cordless radiotelephone system having an extendable geographic coverage area.

### SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention. Various embodiments of the present disclosure mainly aim at providing a method and apparatus for reducing processing delay in wireless networks. Other features and advantages of embodiments of the present disclosure will also be understood from the following description of specific embodiments when read in conjunction with the accompanying drawings, which illustrate, by way of example, the principles of embodiments of the present disclosure.

In a first aspect of the disclosure, there is provided a method in a first device for wireless communication. The method may comprise receiving a sequence of signals from a second device, the sequence of signals comprising a signal of a first type and a signal of a second type; assigning a first priority to the signal of the first type and a second priority lower than the first priority to the signal of the second type; and transmitting the sequence of signals via a transport network to a third device according to the assigned priorities.

In one embodiment, the signal of the first type may comprise a reference signal, and the signal of the second type may comprise a data signal.

In another embodiment, the sequence of signals may comprise a sequence of bits contained in a subframe, and wherein said assigning a first priority to the signal of the first type and a second priority lower than the first priority to the signal of the second type may comprise: buffering bits corresponding to the signal of the first type in a queue with the first priority; buffering bits corresponding to the signal of the second type in a queue with the second priority; and wherein said transmitting the sequence of signals via a transport network to a third device according to the assigned priorities may comprise transmitting the buffered bits via the transport network to the third device according to the priority of the queue where they are buffered.

In further embodiment, transmitting the buffered bits via the transport network to the third device according to the priority of the queue where they are buffered may comprise performing the following upon buffering a predetermined number of bits corresponding to the signal of the first type in the queue with the first priority:
stopping transmitting the bits buffered in the queue with the second priority,
generating a first data unit suitable for transmission via the transport network based on at least the bits buffered in the queue with the first priority, and
transmitting the first data unit via the transport network to the third device;
and/or may comprise performing the following upon completing transmitting the bits buffered in the queue with the first priority:
generating a second data unit suitable for transmission via the transport network based on at least the bits buffered in the queue with the second priority, and
transmitting the second data unit via the transport network to the third device.

In still another embodiment, the method may further comprise generating an indicator for explicitly indicating a start position of a subset of the sequence of signals within the sequence of signals, wherein said transmitting the sequence of signals via a transport network to a third device according to the assigned priorities may comprise transmitting the indicator together with the subset of the sequence of signals via the transport network to the third device. In one embodiment, the subset of the sequence of signals may comprise a subset of the signal of the first type or a subset of the signal of the second type.

In another embodiment, the first device, the second device and the third device can be an assistant point, a terminal device and a serving point involved in a UL COMP operation, respectively.

In a second aspect of the present disclosure, there is provided a method implemented in a first device for wireless communication. The method may comprise receiving a sequence of signals and a plurality of indicators via a transport network from a second device, wherein the sequence of signals is separated into a plurality of subsets of the sequence of signals, and each of the plurality of indicators indicates explicitly a start position within the sequence of signals for each of the plurality of subsets, and wherein the sequence of signals comprises a signal of a first type and a signal of a second type; determining a signal type for each of the plurality of subsets based on a corresponding indicator of the plurality of indicators; and processing each of the plurality of subsets according to the determined signal type.

In one embodiment, the signal of the first type may comprise a reference signal, and the signal of the second type may comprise a data signal. In another embodiment, each of the plurality of subsets may comprise a subset of the signal of the first type or a subset of the signal of the second type. In another embodiment, processing each of the plurality of subsets according to the determined signal type may comprise: processing the subset comprising a signal of the first type, followed by processing the subset comprising a signal of the second type.

In still another embodiment, the method may further comprise receiving the sequence of signals from a third device; and wherein processing each of the plurality of subsets according to the determined signal type may comprise processing the subset determined to be the second type jointly with the sequence of signals received from the third device.

In one embodiment, the first device, the second device and the third device can be a serving point, an assistant point and a terminal device involved in a UL COMP operation, respectively.

In a third aspect of the present disclosure, there is provided an apparatus in a first device adapted for wireless communication. The apparatus may comprise a receiving module configured to receive a sequence of signals transmitted from a second device, the sequence of signals comprising a signal of a first type and a signal of a second type; a priority assigning module configured to assign a first priority to the signal of the first type and a second priority lower than the first priority to the signal of the second type; and a transmitting module configured to transmit the sequence of signals via a transport network to a third device according to the assigned priorities.

In a fourth aspect of the present disclosure, there is provided an apparatus in a first device adapted for wireless communication. The apparatus may comprise a first receiving module configured to receive a sequence of signals and a plurality of indicators via a transport network from a second device, wherein the sequence of signals is separated into a plurality of subsets of the sequence of signals, and each of the plurality of indicators indicates explicitly a start position within the sequence of signals for each of the plurality of subsets, and wherein the sequence of signals comprises a signal of a first type and a signal of a second type; a determination module configured to determine a signal type for each of the plurality of subsets based on a corresponding indicator of the plurality of indicators; and a processing module configured to process each of the plurality of subsets according to the determined signal type.

In a fifth aspect of the present disclosure, there is provided an apparatus adapted for wireless communication. The apparatus may comprise a processor and a memory. The memory may contain instructions executable by the processor whereby the apparatus is operative to perform the method according to the first aspect of the present disclosure.

In a sixth aspect of the present disclosure, there is provided an apparatus adapted for wireless communication. The apparatus may comprise a processor and a memory. The memory may contain instructions executable by the processor whereby the apparatus is operative to perform the method according to the second aspect of the present disclosure.

In a seventh aspect of the disclosure, there is provided an apparatus adapted for wireless communication. The apparatus may comprise process means adapted to perform any method in accordance with the first aspect of the disclosure.

In an eighth aspect of the disclosure, there is provided an apparatus adapted for wireless communication. The apparatus may comprise process means adapted to perform any method in accordance with the second aspect of the disclosure.

In a ninth aspect of the disclosure, there is provided a computer program, comprising instructions which, when executed on at least one processor, cause the at least one processor to carry out the method according to the first aspect of the disclosure.

In a tenth aspect of the disclosure, there is provided a computer program, comprising instructions which, when executed on at least one processor, cause the at least one processor to carry out the method according to the second aspect of the disclosure.

According to the various aspects and embodiments as mentioned above, by transmitting the received sequence of signals to another device according to priorities assigned to signals of different types, the processing delay at the other device can be reduced.

### BRIEF DESCRIPTION OF THE DRAWINGS

The above and other aspects, features, and benefits of various embodiments of the present disclosure will become more fully apparent, by way of example, from the following detailed description with reference to the accompanying drawings, in which like reference numerals or letters are used to designate like or equivalent elements. The drawings are illustrated for facilitating better understanding of the embodiments of the disclosure and not necessarily drawn to scale, in which:
FIG. 1 schematically illustrates a UL COMP operation;
FIG. 2 schematically illustrates multiplexing of reference signals and data signals in a subframe;
FIG. 3 schematically illustrates additional delay introduced due to UL COMP operation;
Figs. 4A-4B illustrate flowcharts of a method 400 for wireless communication according to an embodiment of the present disclosure;
FIG. 5 schematically illustrates data buffering and transmission involved in UL COMP according to an embodiment of the present disclosure;
FIGs. 6A-6C schematically illustrate strategies utilized for transmitting a sequence of signals based on assigned priorities according to some embodiments of the present disclosure;
FIGs. 7A-7B schematically illustrate medium access control protocol data units (MAC PDUs) used for transmitting a subset of the sequence of signals and for transmitting the subset and an indicator respectively according to an embodiment of the present disclosure;
FIG. 8 illustrates a flowchart of a method 800 for wireless communication according to an embodiment of the present disclosure;
FIG. 9 illustrates a schematic block diagram of an apparatus 900 for wireless communication according to an embodiment of the present disclosure;
FIG. 10 illustrates a schematic block diagram of an apparatus 1000 for wireless communication according to an embodiment of the present disclosure; and
FIG. 11 illustrates a simplified block diagram of an apparatus 1110 that may be embodied as or comprised in a base station, and an apparatus 1120 that may be embodied as or comprised in another base station.

### DETAILED DESCRIPTION

The invention made is described in the attached set of independent claims. Further embodiments are described in the attached set of dependent claims. Hereinafter, the principle of the present disclosure will be described with reference to illustrative embodiments. It should be understood, all these embodiments are given merely for one skilled in the art to better understand and further practice the present disclosure, but not for limiting the scope of the present disclosure. For example, features illustrated or described as part of one embodiment may be used with another embodiment to yield still a further embodiment. In the interest of clarity, not all features of an actual implementation are described in this specification.

References in the specification to "one embodiment," "an embodiment," "an example embodiment," etc. indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that, although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs. For example, the term "terminal device" used herein may refer to any terminal or user equipment (UE) having wireless communication capabilities, including but not limited to, mobile phones, cellular phones, smart phones, or personal digital assistants (PDAs), portable computers, image capture devices such as digital cameras, gaming devices, music storage and playback appliances and the like. In the following description, the terms "user equipment" or "UE" and "terminal device" may be used interchangeably. Similarly, the term "base station" (BS) may represent a node B (NodeB or NB), an evolved NodeB (eNodeB or eNB), a Remote Radio Unit (RRU), a radio header (RH), a remote radio head (RRH), a relay, a low power node such as a femto, a pico, and so forth.

For illustrative purposes, several embodiments of the present disclosure will be described in the context of a cellular communication system, for example a 3GPP LTE system. Those skilled in the art will appreciate, however, that the concept and principle of the several embodiments of the present disclosure may be more generally applicable to other wireless networks, for example an ad-hoc network.

The Background section has briefly introduced UL COMP operations in conjunction with FIG. 1. More particularly, a certain terminal device, for example UE 130, is served by multiple points, e.g., a serving point 120 and an assistant point 110, which receive the uplink signals from the UE. The signals received by the assistant points 110 from the UE 130 can be transmitted to the serving point 120 via a transport network 140, for example but not limited to an Ethernet. After that, the data from all points can be jointly processed at the serving point 120 to obtain the UL CoMP gain. It will be appreciated that though only two points, i.e., a serving point 120 and an assistant point 110, are shown in FIG. 1, there can be multiple assistant points involved in the UL COMP operations. Each of the multiple assistant points can forward the received uplink data from a terminal device to the serving point 120 to facilitate co-processing.

Since channel state information will be required for demodulation, during the co-processing, the channel state information of the received signals from each assistant point may be firstly estimated based on measurements of the reference signals (RS), for example demodulation reference signals (DMRS), in a subframe which may also include data signals. The RS can be time divisionally multiplexed (TDMed) with data signals in each subframe in accordance with the 3GPP LTE specification. An example of multiplexing the RS and the data signals in an uplink subframe can be illustrated in FIG. 2, where the 4^{th} and 11^{th} OFDM symbols (denoted as OFDM symbol #3 and #10) are reserved and allocated to the DMRS. In general, after receiving the reference signals, for example the RS in the OFDM symbols #3 and #10 of a subframe, a base station, for example the serving point 120 shown in FIG.1 which may be an evolved node B (also called eNodeB, or eNB) could do channel estimation for the subframe, which can be further utilized for data demodulation.

In the UL COMP scenario illustrated in FIG. 1, data from the UE 130 and the data from the assistant point 110 can be co-processed at the serving point 120. In one embodiment, data from the UE 130 can be demodulated jointly with the data from the assistant point 110, e.g., data from the UE 130 and the data from the assistant point 110 can be combined in accordance with certain criterion during or after demodulation. After co-processing at the serving point, received signal quality from the UE can be well improved, due to the combination of the multiple received data signals of multiple points. Correspondingly, the system performance, such as cell-edge user throughput, can be improved.

However, it is should be noted that the co-processing gain is obtained at the cost of transmitting/forwarding the received data and reference signals from the assistant points to the serving point. The transmitting/forwarding introduces additional processing latency, compared with a traditional system without UL CoMP. The additional latency is schematically illustrated in FIG. 3.

As shown in FIG. 3, the latency consists of two parts which are contributed by two kinds of operations, respectively.

The first part is an inner-point processing delay, and can be denoted as Tᵢₙᵢₜ. The inner-point processing delay is introduced in each assistant point due to the processing of moving the received signals from a radio unit of the assistant point to a transport network. The value of Tᵢₙᵢₜ depends on hardware performance of the assistant point, and the typical value can be about tens of micro second.

The second part is an inter-point transmission delay, and can be denoted as Tᵢₙₜₑᵣ. The inter-point transmission delay is introduced by the transport networks due to sending the signals from the assistant point to the serving point. The value of Tᵢₙₜₑᵣ is closely related with the transmission bandwidth of the transport network. For example, assuming a 10MHz bandwidth LTE system with 600 resource elements (REs) in each OFDM symbol, the UL raw data after basic processing including Fast Fourier Transform (FFT) and removing of cyclic prefix (CP) are 14,400 bits with a conversion of 24 bits per element for each OFDM symbol. Assuming the bandwidth of the transport network is 20Mbps, the inter-point transmission delay Tᵢₙₜₑᵣ due to sending the 14,400 bits from an assistant point to a serving point could be 14,400 bits/20 million bits per second (Mbps) = 720 microsecond (us).

As mentioned above, the data signals can only be demodulated after being received and after channel state information is derived from the reference signals. That is to say, there is still some further delay due to channel estimation processing before the demodulation processing can be performed at the serving point, as shown in FIG. 3. That is to say, demodulation delay includes the inner-point processing delay, the inter-point transmission delay and channel estimation processing delay, however, the channel estimation processing delay can be common for a system without COMP and a system with COMP.

In FIG. 3, demodulation delays of the systems with and without UL CoMP are compared. As shown in FIG. 3, in this example with the DMRS locating in the OFDM symbols #3 and #10, the system with UL COMP will introduce a total demodulation delay of T_{delay}=Tₘᵢₜ+11 ×Tᵢₙₜₑᵣ before demodulation compared with the system without CoMP. With the above assumption and a typical inner processing delay of Tᵢₙᵢₜ=20us, the total delay T_{delay} would be about 8ms, which is un-acceptable for some latency-sensitive application, such as voice.

One possible way to reduce the inter-point processing latency is to use more powerful hardware which means higher cost; another alternative for inter-point transmission delay reduction is to introduce a more powerful transport network with larger bandwidth, such as by replacing cables with optical fibers, etc., however, it also causes higher cost to the operators.

In view of the above concerns, following embodiments of the present disclosure provide a solution adapted for wireless communication, which may address one or more of the aforesaid disadvantages of the existing COMP operations. However, it will be appreciated by those skilled in the art that the principle of the solution can also apply to a wireless system without UL COMP, for example, to reduce processing delay.

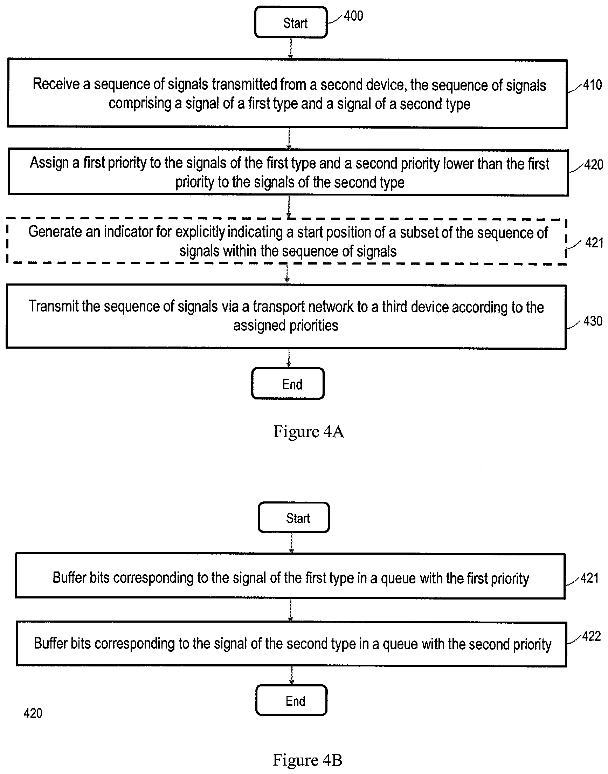

Hereafter, the solution for wireless communication according to embodiments of the present disclosure will be described in details with reference to FIGs. 4A-11.

Reference is now made to FIG. 4A, which shows a flowchart of a method 400 for wireless communication according to an embodiment of the present disclosure. In one embodiment, the method 400 may be implemented by a base station, for example the assistant point 110 as shown in FIG. 1 which is involved in a UL COMP operation. It is to be understood that the present disclosure is not limited in this regard. In alternative embodiments, the method 400 may be implemented by any other suitable entities in the wireless communication system, for forwarding received signals according to assigned priorities to the signals.

As illustrated, the method 400 comprises, in block 410, receiving, at a first device, a sequence of signals from a second device, the sequence of signals comprising a signal of a first type and a signal of a second type.

In one embodiment, the first device can be the assistant point 110 as shown in FIG. 1, and the second device can be a terminal device, for example the UE 130.

In another embodiment, the signal of the first type may comprise reference signal (RS). In one embodiment, the RS can be used for at least one of channel estimation, interference estimation, noise estimation, and signal to noise and interference ratio estimation, for example. In an embodiment, the signal of the first type can be the demodulation reference signal (DMRS) as shown in FIG. 2. The signal of the second type can comprise data signal. However, embodiments of the present disclosure are not limited thereto. In one embodiment, the signals of the first type may be any other information which should be processed with higher priority than the signals of the second type. For example, the signals of the first type may comprise control signaling which should be detected before demodulating the signals of the second type.

In still another embodiment, the sequence of signals may comprise a sequence of bits contained in a subframe. For example, the sequence of signals can be raw bits contained in a subframe, and the raw bits can be an output from basic processing, for example, Fast Fourier Transform (FFT), Cyclic Prefix (CP) removing and analog to digital conversion (ADC). It will be appreciated that the sequence of bits may also comprise bits contained in multiple subframes or frames, in another embodiment. That is, embodiments of the present disclosure are neither limited to the exact number of subframes carrying the sequence of signals nor limited to exact time duration for receiving the sequence of signals.

In one embodiment, the signal of the first type (e.g., DMRS) can be TDMed with the signal of the second type (e.g., data signals). Thus, in one embodiment, in block 410, the method comprises receiving at least one signal of the second type prior to receiving at least one signal of the first type. For example, in accordance with a subframe structure shown in FIG. 2, the data signal in the first three OFDM symbols (shown as OFDM symbols #0, #1 and #2 in FIG. 2) will be received prior to the first DMRS contained in the 4th OFDM symbol (shown as OFDM symbol #3 in FIG. 2). It will be appreciated that the order for receiving the sequence of signals depends on how the signals of the first type and the signals of the second type are multiplexed in a subframe when being transmitted, and the multiplexing shown in FIG. 2 is just for illustrative purpose and not for limiting. Embodiments of the present disclosure are not limited to any specific multiplexing of the signals of the two types or any specific order for the receiving in block 410.

In block 420, the method 400 comprises assigning a first priority to the signal of the first type and a second priority lower than the first priority to the signal of the second type. In block 430, the method further comprises transmitting the sequence of signals via a transport network to the third device according to the assigned priorities.

The method 400 enables transmitting the sequence of signals in an order determined by the signal types, such that the signal type required to be processed first can be delivered earlier than other signal types. By this way, processing delay at the receiver side can be reduced. For example, reference signals can be transmitted with higher priority than the data signals, such that they can be processed, as early as possible, to derive channel state information which is to be used for data signals demodulation, and thereby reducing the processing delay of data signals.

In one embodiment, the third device can be, but not limited to, a base station, for example, the serving point 120 shown in FIG. 2 involved in UL COMP operation, which may process the sequence of the signals received from the terminal device 130 and the sequence of signals received from the assistant point 110 jointly.

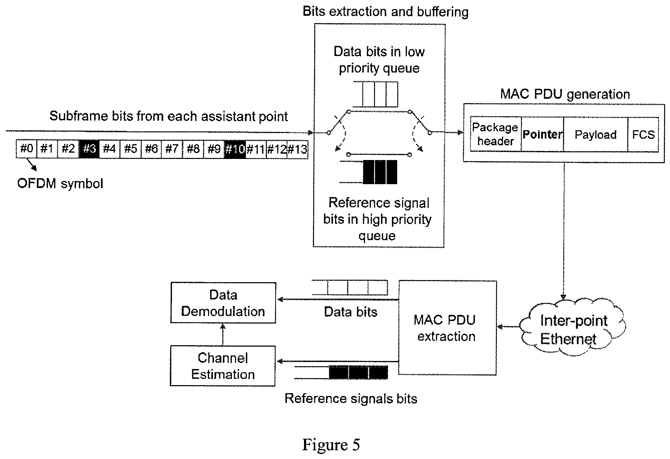

In FIG. 4B, an embodiment for performing priority assignment in block 420 is illustrated. In this embodiment, the first device may assign priorities to the signal of the first type and the signal of the second type via buffering bits corresponding to the signal of the first type in a queue with the first priority in a block 421; and buffer bits corresponding to the signal of the second type in a queue with the second priority in a block 422. One example for such an implementation is schematically illustrated in FIG. 5. In the example shown in FIG. 5, reference signal bits can be buffered in a high priority queue (i.e., the queue with the first priority) and data bits can be buffered in a low priority queue (i.e., the queue with the second priority lower than the first priority). It will be appreciated that the reference signal bits are just illustrated as an example of the signal of the first type, and signals buffered in the high priority queue may be of any other suitable type, for example control signals, in other examples. It can also be understood that the sequence of signals may comprise more than two types of signals, and accordingly, signal of different types may be buffered in more than two queues, each of which has respective priority. In this embodiment, in block 430, the first device may transmit the buffered bits according to the priority of the queue where they are buffered. That is, bits buffered in the high priority queue can be transmitted with the first priority while bits buffered in the low priority queue can be transmitted with the second priority lower than the first priority.

Alternatively, in another embodiment, the signals of the first type and the signals of the second type may be buffered in a same queue, but extracted (or, read out) and transmitted in block 430 in an order according to the assigned priorities.

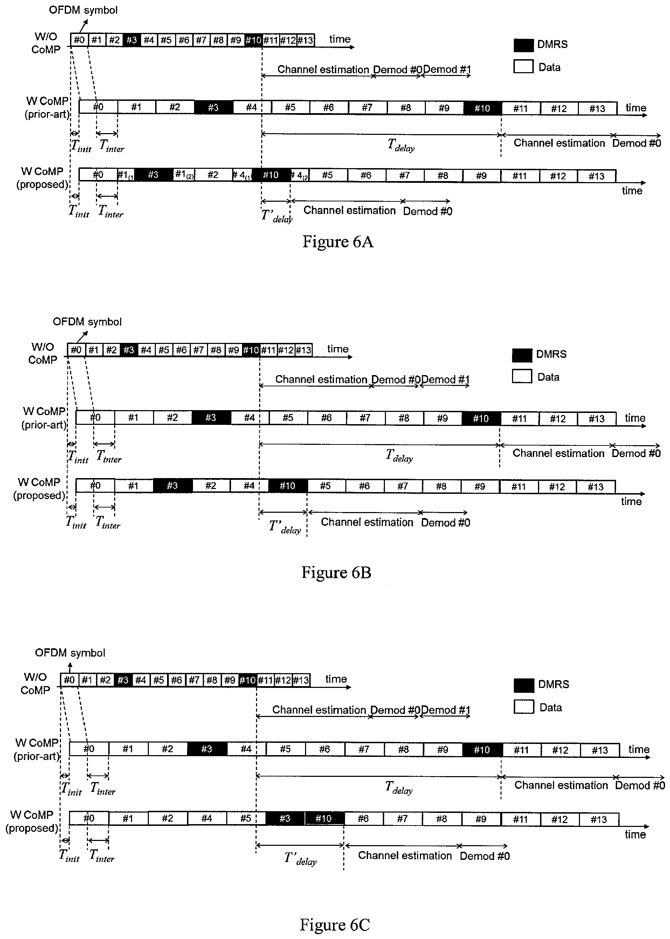

Depending on the transmission mode utilized in block 430 of the method 400 illustrated in FIG. 4A, the delay before demodulation may vary. In FIGs. 6A-6C, some exemplary transmitting modes according to embodiments of the disclosure are illustrated schematically. For comparison purpose, conventional transmission operation via a transport network for UL COMP is also illustrated in FIGs. 6A-6C.

A transmission mode used in block 430 of the method 400 is illustrated in FIG. 6A, where the bits buffered in the low priority queue are transmitted only if the high priority queue is empty, otherwise, the bits buffered in the high priority queue are extracted for transmission. As shown in FIG. 6A, data signals in OFDM symbols #0, #1, and #2 are received before receiving the RS in OFDM symbol #3, and these data signals in OFDM symbols #0, #1, and #2 will be buffered into a queue with the second priority (also called low priority queue). The queue with the first priority higher than the second priority (also called high priority queue) is empty until the RS in the OFDM symbol #3 is received. Thus, the data signals in OFDM symbols#0 are transmitted firstly, followed by the transmission of data signals of OFDM symbol#1. When the RS in OFDM symbol #3 is received before completing transmitting all of the data signals of OFDM symbol #1, the RS in OFDM symbol#3 is buffered into the high priority queue which makes the high priority queue not empty any longer. Correspondingly, the transmitting of the data signals of OFDM symbol #1 is stopped, that is, the assistant point stops extracting bits from the low priority queue, and begins to extract bits from the high priority queue for transmission. As shown in FIG. 6A, the RS in the OFDM symbol#3 is transmitted after transmitting a part of the data signals of OFDM symbol #1, denoted as OFDM symbol #1₍₁₎ in FIG. 6A. After the RS in the OFDM symbol #3 is transmitted, the high priority queue is empty again untill another RS in OFDM symbol #10 is received. So, as shown in FIG. 6A, upon completing the transmission of RS of OFDM symbol #3, the remaining part of data signal of OFDM symbol #1 (denoted as OFDM symbol #1₍₂₎ in FIG. 6A), data signals of OFDM symbol 2, and a part of the data signal of OFDM symbol #4 can be transmitted. Then the transmission of data signals is pended again due to the RS of the OFDM symbol #10 is received and buffered. After the transmission of the RS of OFDM symbol #10, remaining data signals buffered in the low priority queue can be transmitted. In this example, the additional delay T_{delay} before demodulation compared with a system without COMP is minimized, since the signal of the first type (i.e., RS in this example) is transmitted upon it is received. Assuming the Tᵢₙₜₑᵣ can be 720us, and the Tᵢₙᵢₜ can be 20us, the processing delay is reduced to be T'_{dela}y=Tᵢₙᵢₜ+Tᵢₙₜₑᵣ=740us, which is much smaller than the value in prior-art (about 8ms).

In another embodiment, the RS buffered in the high priority queue can be transmitted after completing transmitting data signal of a previous OFDM symbol which has started before receiving the RS, rather than stopping transmitting the data signals of the previous OFDM symbol. For example, as shown in FIG. 6B, the RS of the OFDM symbol #3 can be transmitted after completing the transmission of data signals of OFDM symbol #1 since the transmission of the data signals of OFDM symbol #1 started before receiving the RS of the OFDM symbol #3. With such a transmission strategy, the additional delay T_{delay} can be longer compared with that of the example shown in FIG. 6A, however, it is still much shorter compared with that of the conventional UL COMP processing. The implementation in this example allows inserting data signals of an OFDM symbol (e.g., OFDM symbol #1) into a single data unit suitable for transmission via a transport network, e.g., a data packet, while the implementation shown in FIG. 6A may require to split the data signals of the OFDM symbol #1 into two packets.

In another embodiment, in block 430 of FIG. 4A, the first device may perform the following operations upon buffering a predetermined number of bits corresponding to the signal of the first type in the queue with the first priority (also called high priority queue): stopping transmitting the bits buffered in the queue with the second priority (also called low priority queue); generating a first data unit suitable for transmission via the transport network based on at least the bits buffered in the queue with the first priority, and transmitting the first data unit via the transport network to the third device; and/or, the first device may generate a second data unit suitable for transmission via the transport network based on at least the bits buffered in the queue with the second priority, and transmit the second data unit via the transport network to the third device, upon completing transmitting the bits buffered in the queue with the first priority. That is, in this embodiment, a threshold for the number of bits buffered in the queue with the first priority can be introduced, for determining whether to stop the transmission of signal buffered in the queue with the second priority.

In an embodiment, the predetermined number of bits corresponding to the signal of the first type (i.e., the threshold) can be the number of bits corresponding to one signal of the first type, for example, 14,400 bits. For example, upon the bits corresponding to the first RS, i.e., the RS in the OFDM symbol #3, being buffered in the high priority queue, the first device can stop transmitting the bits buffered in the low priority queue, generate a first data unit suitable for transmission via the transport network (e.g., an Ethernet) based on at least the bits buffered in the queue with the first priority, and transmit the first data unit via the transport network to the third device.

In another embodiment, the predetermined number of bits corresponding to the signal of the first type can be the number of bits corresponding to the total number of the signals of the first type (e.g., RSs), that is, the transmission of the signals of the first type can start after all the signals of the first type are received and buffered, for example, when both RSs in OFDM symbol #3 and OFDM symbol #10 are received and buffered as shown in FIG. 6C. In accordance with this embodiment, it allows transmitting the signals of the first type in a single data unit (e.g., a MAC PDU), and reducing the total number of data units required for transmitting the sequence of signals. As a result, the introduced additional delay T_{delay} before demodulation may be increased compared with the implementation shown in FIGs. 6A and 6B. However, the delay can still be much shorter than that of the conventional processing, as shown in FIG. 6C.

In still another embodiment, the predetermined number of bits corresponding to the signal of the first type can be selected based on allowed maximum/minimum payload size of the data unit suitable for transmission via the transport network.

In one embodiment, the first data unit being generated may comprise only the signal of the first type. For example, as shown in FIG. 6A, when the bits corresponding to the RS of the OFDM symbol #3 are buffered into the high priority queue, a new data unit can be generated with only the buffered bits corresponding to the RS of the OFDM symbol #3 (or a part thereof) as payload. Similarly, upon completing transmitting the bits buffered in the high priority queue, another new data unit can be generated with only bits corresponding to some data signals (e.g., data signals in the second part of the OFDM symbol 1, data signals in the OFDM symbols 2 and 4, or a part thereof) as payload. It will be appreciated that, the payload of the generated data unit may comprise both the signal of the first type and the signal of the second type, in another embodiment. For example, a new MAC PDU can be generated to carry the signals of OFDM symbols #3 (RS), #2 (data) and #4 (data) shown in FIG. 6B.

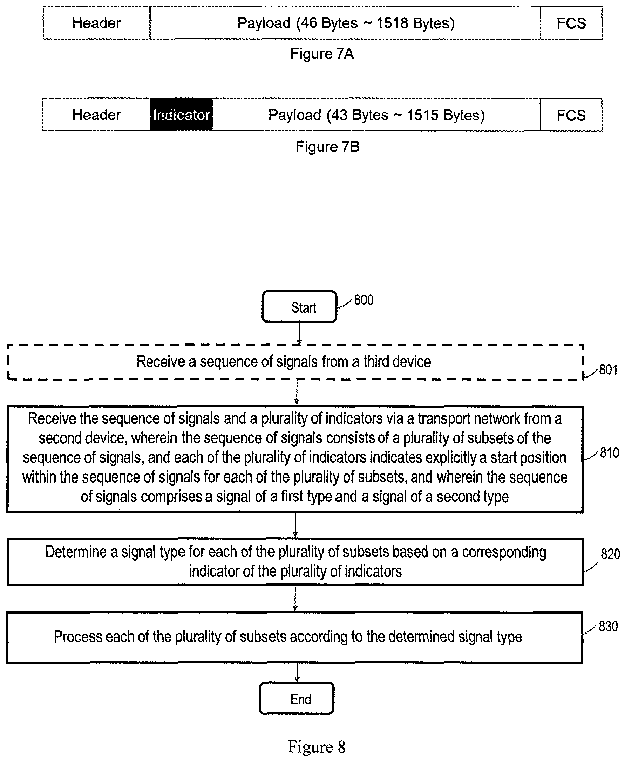

In one embodiment, generating a first/second data unit suitable for transmission via the transport network may comprise generating a new media access control (MAC) protocol data unit (PDU) suitable for transmission via an Ethernet. In FIG. 7A, a schematic diagram of a MAC PDU according to the IEEE 802.3 standard is shown as an example. As shown, the MAC PDU includes a header, a payload, and a frame check sequence (FCS) field. In the Ethernet as an example of the transport network, via which to transmit the sequence of signals, the header of the MAC PDU is an Ethernet package header used for addressing, the FCS is the checksum of total package, and the Payload field is used for inter-site (i.e., inter-point) data exchange, that is, the payload can be used to carry a subset of the sequence of signals to be sent from an assistant point to a serving point. Though as shown in FIG. 7A, the payload size can be in the range of 46 bytes to 1518 bytes in this example, it will be appreciated that embodiments of the disclosure are not limited to any exact packet format. Since there could be various kinds of transport networks as a non-3GPP defined interface, the transmission formats of the data on the MAC layer among points are flexible. Further, it can be appreciated that, MAC PDU is just an example of a data unit suitable for transmitting via a transport network in one embodiment, and in other embodiments, any suitable data unit suitable for transmission via a transport network can be used. That is, embodiments of the disclosure are not limited to the use of MAC PDU for carrying the sequence of signals.

In one embodiment, in block 430 of the method 400, the first device may transmit to the third device a received subset of the sequence of signals according to the assigned priorities before completing receiving the whole sequence of signals which is separated into a plurality of subsets for transmission. As shown in the examples of FIGs. 6A-6C, signals of OFDM symbols #0, #1, and #3 are transmitted before completing receiving all the 14 OFDM symbols at the assistant point side. However, embodiments of disclosure are not limited to this, and in another embodiment, the transmission of the signals of the first type may start after the whole sequence of signals is received, followed by transmitting the signals of the second type.

In one embodiment, the method 400 may further comprise a block 421, for generating an indicator for explicitly indicating a start position of a subset of the sequence of signals within the sequence of signals, and then in block 430, the indicator can be transmitted together with the subset of the sequence of signals to the third device.

Since a subset of the sequence of signal can be transmitted in block 430 according to the priority assigned to the signal in accordance with embodiments of the disclosure, which may lead to a transmission order unknown to the receiver, and thus the indicator generated in block 421 can be used to indicate to the receiver which part of the sequence of signals are being transmitted, thereby enabling the receiver to reorder the received subsets. For example, as shown in FIG. 6A, the data signals of OFDM symbol #0 and part of OFDM symbol #1 are transmitted, followed by transmitting RS of OFDM symbol #3, rather than the remaining part of the OFDM symbol #1. The indicator can be generated to inform the receiver on a position within the sequence of signals for the transmitted subset. In other words, the indicator can be generated to indicate to the receiver which part of the sequence of signals are being transmitted, thereby enabling the receiver to know whether the received signals are reference signals, or data signals.

Each subset of the sequence of signals, with which an indicator is transmitted, may comprise a subset of signal of the first type, or, a subset of signal of the second type. However, a subset of the sequence of signals including both signal of the signal type and signal of the second type is also possible.

In one embodiment, the indicator generated in block 421 may indicate the start position of the subset of the sequence of signals with a granularity of OFDM symbol, that is, it may indicate from which OFDM symbol the subset of the sequence of signals starts. For example, for a subset carrying the first RS in OFDM symbol #3, the indicator can be generated to indicate that the transmission starts from the OFDM #3.

In another embodiment, the indicator generated in block 421 may indicate with a granularity of bit or byte. That is, the transmission of the subset starts from which bit or byte. It will be appreciated that embodiments of the disclosure are not limited to any granularity of indication. In other words the indicator may indicate the start position of the subset with any suitable granularity. It can also be understood that the required length for the indicator depends on the granularity. For example, to indicate an index of an OFDM symbol, it can be 4 bits, while to indicate an index of a bit or byte, it may need to be 3 or more bytes. Embodiments of the disclosure are not limited to exact length of the indicator, instead, the length can be selected properly depending on practical requirements in corresponding embodiments.

In one embodiment, the method 400 may comprise inserting the indicator into a predetermined field of a data unit carrying the subset of the sequence of signals, and transmitting the data unit to the third device. In FIG. 7B, the indicator is shown to be inserted into the payload part of a MAC PDU and occupies the first 3 bytes. It can be appreciated that the indicator can also be inserted in any other suitable filed and/or position, for example, the header part, in another embodiment. It should also be noted that in case the subset of the sequence of signals is transmitted in other data unit than a MAC PDU, the indicator can be inserted into any proper field of the other data unit and transmitted together with the subset of the sequence of signals.

It should be noted that the indicator is not necessarily required . Alternatively, the start position of the subset of the sequence of signals being transmitted can be known by the receiver by any other suitable means. For example, the receiver may know the start position of the subset based on the size of the data unit carrying the subset. Assuming the RSs and the data signals are transmitted in a predefined order as shown in FIG. 6A based on the assigned priorities, and assuming in one embodiments that, 4 data packets can be used to transmit the sequence of signals, with a packet#1 carrying signals of OFDM symbols #0 and #1₍₁₎, a packet#2 carrying signals of OFDM symbols #3, #1₍₂₎, #2, and #4₍₁₎, a packet#3 carrying signals of OFDM symbols #10, #4₍₂₎, and #5 to #8, and a packet#4 carrying signals of OFDM symbols #9 and #11 to #13. In such a case, it can be observed that the 4 packets are with different payload size respectively, and it enables the receiver to derive which packet is received based on the payload size, thereby enabling the receiver to know the content of the packet, that is, which data signals and/or RS are transmitted. With such an implementation, the block 421 can be avoided. Alternatively, still assuming that 4 packets are used for transmitting the sequence of signals and assuming the sequence of signals are divided into 4 predefined subsets for transmitting in the 4 packets respectively, there will be a predefined mapping between the packet index and the subset. In such a case, the receiver may know the start position of the subset based on the packet index implicitly. That is, the indicator for explicitly indicating a start position within the sequence of signals for each subset of the sequence of signals may not be required in some embodiments. However, the demodulation delay may be increased in such cases yet still will be much shorter than that of the prior art solution.

It should be appreciated that though in some embodiments of method 400, the first device, the second device and the third device can be an assistant point, a terminal device and a serving point involved in a UL COMP operation, respectively, embodiments of the disclosure are not limited to a UL COMP scenario. In another embodiment, the first device may be a relay station, the second device can be a terminal device and the third device can be a base station in a wireless system without COMP. That is, the method 400 may also be applied to other scenarios where UL COMP technique is not utilized, to reduce processing delay at the third device side.

Reference is now made to FIG. 8, which illustrates a flowchart of a method 800 for wireless communication according to an embodiment of the present disclosure. In one embodiment, the method 800 may be implemented by a base station, for example, the serving point 120 as shown in FIG. 1. It is to be understood that the present disclosure is not limited in this regard. In an alternative embodiment, the method 800 may be implemented by any other suitable entities in a wireless communication system, for example an access point in an ad-hoc network, for receiving signals and processing the received signals according to the indicated signal type.

As illustrated, the method 800 comprises, in block 810, receiving, at a first device, a sequence of signals and a plurality of indicators via a transport network from a second device, wherein the sequence of signals is separated into a plurality of subsets of the sequence of signals, and each of the plurality of indicators indicates explicitly a start position within the sequence of signals for each of the plurality of subsets, and wherein the sequence of signals comprises a signal of a first type and a signal of a second type. In one embodiment, the first device can be a base station, for example but not limited to the serving point 120 as shown in FIG. 1, and the second device can be the assistant point 110. In another embodiment, the signal of the first type can comprise a reference signal (RS). In one embodiment, the RS may be used for at least one of channel estimation, interference estimation, noise estimation and SINR estimation. For example, the signal of the first type can comprise demodulation reference signal (DMRS), while the signal of the second type may comprise a data signal. It will be appreciated that embodiments of the disclosure are not limited to this, and in other embodiments, the signal of the first type may comprise any suitable signal type, for example, it can be control signaling required for demodulating the signals of the second type.

In one embodiment, the sequence of signals received in block 810 can be same as that transmitted in block 430 of the method 400, and thus the descriptions on the sequence of signals provided with reference to the method 400 also apply here. For example, the order for receiving the sequence of signals can be same as that illustrated in FIGs. 6A-6C and therefore details will not be repeated here.

In an embodiment, each of the plurality of subsets may comprise a subset of the signal of the first type or a subset of the signal of the second type. For example, a subset may include bits corresponding to the RS of OFDM symbol #3 shown in FIGs. 6A-6C or a part thereof. As another example, a subset may include bits corresponding to continuous or non-continuous data signals, e.g., it may include bits corresponding to data in OFDM symbol #2 shown in FIG. 6B, or data in both OFDM symbols #2 and #4. However, as described with reference to the method 400, a subset of the sequence of signals may contain both the signal of the first type and the signal of the second type, in another embodiment. For example, a subset may include bits corresponding to RS in OFDM symbol #3, and data in OFDM symbol #1₍₂₎ shown in FIG. 6A.

Regarding the indicator received together with each of the plurality subsets of the sequence of signals, it can indicate explicitly a start position within the sequence of the signals for the corresponding subset with any suitable granularity, as described with reference to FIG. 4A. For example, it may indicate a subset starts from the *i*th OFDM symbol of the sequence of signals, where *i* can be an interfere no less than zero. Alternatively, it may indicate the subset starts from the *j*th bit/byte of the sequence of signals, where *j* is also an integer no less than zero, and in such case, the indicator can be much longer than that used for indicating an OFDM symbol index, e.g., it can occupy 3 bytes.

In an embodiment, receiving the sequence of signals and the plurality of indicators via a transport network from a second device may comprise receiving each subset of the sequence of the signals and a corresponding indicator together in a separate data unit, e.g., in a MAC PDU shown in FIG. 7B. However, it should be appreciated that since there could be various kinds of transport networks as a non-3GPP defined interface, the format of the data unit carrying the subset and the indicator may vary.

The method further comprises, in block 820, determining a signal type for each of the plurality of subsets based on a corresponding indicator of the plurality of indicators, and in block 830, processing each of the plurality of subsets according to the determined signal type.

In one embodiment, in block 820, the serving point may determine a start position for a received subset based on the indicator received together with it, and then derives a signal type for the signals in the received subset based on a multiplexing pattern of the signal of the first type and the signal of the second type, which may be predefined, or specified in corresponding communication standard, and thus known to both the transmitter and the receiver. For example, if the received indicator indicates the start position is OFDM symbol #3, then based on the multiplexing pattern as shown in FIG. 2, the serving point can know the signal contained in the received subset is the first RS in a subframe.

In one embodiment, in block 830 of the method 800, the serving point may process the subset comprising a signal of the first type, followed by processing the subset comprising a signal of the second type. For example, the serving point may process the RS for channel estimation and/or interference estimation, and/or noise estimation, and/or SINR estimation, and then demodulate the data signals based on the estimation results. In one embodiment, in block 830, the method 800 may comprise processing the subset comprising a signal of the first type, and then determine to discard or process the subset comprising a signal of the second type based on the processing result of the subset comprising the signal of the first type. For example, the serving point may determine whether to process the subset comprising data signals based on SINR estimated based on processing the RS signal. That is, it may process the subset comprising data signals only when the estimated SINR is above a threshold.

In another embodiment, in block 830, the method 800 may comprise buffering each subset of the sequence of signals received from the second device (for example the assistant point 110) in a queue with a first priority or a in a queue with a second priority lower than that of the first priority based on the determined signal type for the subset in block 820, and then processing the subset based on the priority of the queue in which they are buffered. For example, the serving point may buffer signal of the first type in the queue with the first priority and buffer signal of the second type in the queue with the second priority, and then the signal buffered in the queue with the first priority can be processed first, followed by processing the signal buffered in the queue with the second priority.

In one embodiment, the method 800 may further comprise, in block 801, receiving the sequence of signals from a third device; and in such case, the first device can receive two copies of the sequence of signals, and then in block 830, the first device may process the subset of the sequence of signals received from the second device jointly with the sequence of signals received from the third device. In one embodiment, the first device, the second device and the third device can be a serving point, an assistant point and a terminal device involved in UL COMP operation, respectively. In this embodiment, the serving point can get COMP gain by processing the received subsets of the sequence of signals from the second device and the received sequence of signals from the third device jointly. Furthermore, since the indicator transmitted together with each subset of the sequence of signals allows the second device (e.g., the assistant point) to transmit the sequence of signals in a different order than that used by the third device for transmitting the sequence of signal, the demodulation delay at the serving point side can be greatly reduced. However, as described with reference to the method 400, the indicator may not be required, and in case the indicator is not transmitted together with a subset of the sequence of signals, the serving point can determine the signal type of the received subset based on other means, for example, based on a packet index or a packet size implicitly.

In an embodiment, in block 830, the method 800 may comprise processing the subset determined to be the second type jointly with the sequence of signals received from the third device. In an embodiment, the second type can be, but not limited to, data signals. In other embodiments, the second type can be any signal type suitable for co-processing.

In another embodiment, in block 830, processing the subset of the sequence of signals received from the second device jointly with the sequence of signals received from the third device may comprise combining the subset of the sequence of signals received from the second device with the sequence of signals received from the third device according to any predetermined criterion, e.g., a maximum ratio combining criterion.

In still another embodiment, in block 830, processing the subset of the sequence of signals received from the second device jointly with the sequence of signals received from the third device may comprise processing the received subset of the sequence of signals from the second device separately without co-processing with the received signal from the third device when certain condition is satisfied. For example, when the third device is much closer to the second device than to the first device, the signals received at the second device side are more reliable, and in such case, the first device may only demodulate the subset of the sequence of signals received from the second device. In one embodiment, in block 830, the serving point may firstly process the subset of the signal of the first type received from the second device, for example the RS, to get a SINR estimation for the sequence of signal received from the second device, and if the SINR is above a certain threshold, the serving point may determine to process the received subset of the sequence of signals from the second device separately without co-processing with the received signal from the third device. In another embodiment, in block 830, the serving point may firstly process the RS received from the second device to get a first SINR estimation, and then compare it with a second SINR estimated for the sequence of signals received from the third device, and if the first SINR is higher than the second SINR by a threshold, the serving point may determine to process the received subset of the sequence of signals from the second device separately without co-processing with the sequence of signals received from the third device.

Similarly, in an embodiment, in block 830, processing the subset determined to be the second type jointly with the sequence of signals received from the third device may comprise discarding the subset received from the second device, and only processing the sequence of signals received from the third device. This may be implemented, for example, when the third device is very close to the first device and far from the second device. In one embodiment, the serving point may firstly process the subset of the signal of the first type received from the second device, for example the RS, to get a signal to noise and interference (SINR) estimation for the sequence of signal received from the second device, and if the SINR is below a certain threshold, the serving point may determine to discard the received subset of the sequence of signals from the second device. In another embodiment, in block 830, the serving point may firstly process the RS received from the second device to get a first SINR estimation, and then compare it with a second SINR estimated for the sequence of signals received from the third device, and if the first SINR is lower than the second SINR by a threshold, the serving point may determine to discard the subset of the sequence of signals received from the second device and only process the sequence of signals received from the third device.

It should be appreciated that though in some embodiments of method 800, the first device, the second device and the third device can be a serving point, an assistant point and a terminal device involved in UL COMP operation, respectively, embodiments of the disclosure are not limited to such a UL COMP scenario. In another embodiment, the first device may be a base station, while the second device can be a relay station. That is, the method 800 may be applied to other scenarios where UL COMP technique is not utilized, to reduce processing delay at the first device side.

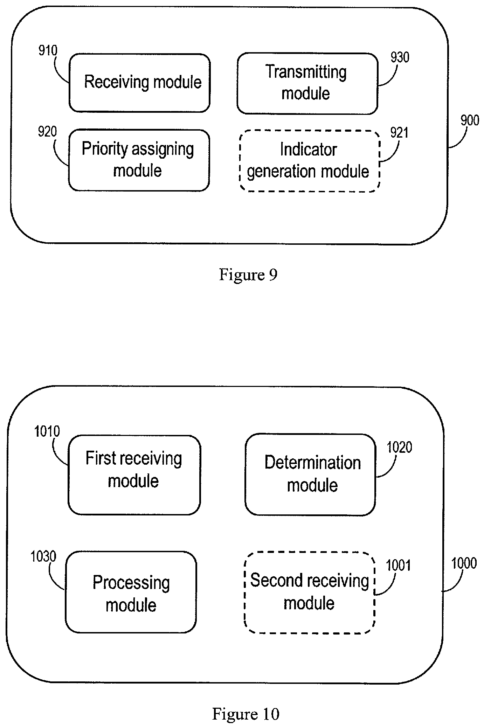

Reference is now made to FIG. 9, which illustrates a schematic block diagram of an apparatus 900 in a first device adapted for wireless communication according to an embodiment of the present disclosure. The apparatus 900 may be embodied in/as a base station, for example the assistant point 110 involved in UL COMP operation as shown in FIG. 1, in one embodiment. Alternatively or additionally, the apparatus 900 may also be embodied in/as any suitable network device, for example, a relay station, which may not be involved in a UL COMP operation. The apparatus 900 is operable to carry out the example method 400 described with reference to FIGs. 4A-4B and possibly any other processes or methods. It is also to be understood that the method 400 is not necessarily carried out by the apparatus 900. At least some steps of the method 400 can be performed by one or more other entities.

Particularly, as illustrated in FIG. 9, the apparatus 900 further comprises a receiving module 910 configured to receive a sequence of signals transmitted from a second device, the sequence of signals comprising a signal of a first type and a signal of a second type; a priority assigning module 920 configured to assign a first priority to the signal of the first type and a second priority lower than the first priority to the signal of the second type; and a transmitting module 930 configured to transmit the sequence of signals via a transport network to a third device according to the assigned priorities. Since the apparatus 900 can transmit the sequence of signals in an order determined by the signal types, the signal type required to be processed first can be delivered earlier than other signal types. By this way, processing delay at the receiver side can be reduced. For example, reference signals can be transmitted by the apparatus 900 with higher priority than the data signals, such that they can be processed, as early as possible, to derive channel state information which is to be used for data signals demodulation, and thereby reducing the processing delay of data signals.

As described above with reference to the method 400, signal of a first type may comprise a reference signal (RS). In one embodiment, the RS may be used for at least one of channel estimation, interference estimation, noise estimation, and SINR estimation. For example, the signal of the first type can be demodulation RS (DMRS) shown in FIG. 2. In another embodiment, the signal of a second type may comprise a data signal. It will be appreciated that the signal of the first type and the signal of the second type can be any suitable signal type, in other embodiments. For example, the signal of the first type can be some control signal required for demodulating a data signal.

In one embodiment, the apparatus 900 may further comprise an indicator generation module 921, configured to generate an indicator for explicitly indicating a start position of a subset of the sequence of signals within the sequence of signals, and the transmitting module 930 may be configured to transmit the indicator generated in the indicator generation module 921 together with the subset of the sequence of signals via the transport network to the third device. The design for the indicator has been described with reference to the method 400 and the FIG. 4A and FIG. 7B, and thus will not be detailed herein for the conciseness purpose.

In an embodiment, the subset of the sequence of signals may comprise a subset of the signal of the first type or a subset of the signal of the second type. The subset of the sequence of signals may comprise both the signal of the first type and the signal of the second type, in another embodiment.

In one embodiment, the transport network can be, but not limited to, an Ethernet.

In one embodiment, the first device where the apparatus 900 is embodied, the second device and the third device can be an assistant point, a terminal device and a serving point involved in a UL COMP operation, respectively. It will be appreciated that embodiments of the disclosure are not limited to such scenario, for example the first device where the apparatus 900 is embodied, the second device and the third device can also be a relay, a terminal device and a base station in a wireless system where UL COMP is not exploited, respectively.

The above modules may be configured to implement corresponding operations or steps as described with reference to FIGs. 4A-4B and thus will not be detailed herein for the conciseness purpose.

FIG. 10 illustrates a schematic block diagram of an apparatus 1000 in a in a first device adapted for wireless communication according to an embodiment of the present disclosure. The apparatus 1000 may be embodied in/as a base station, for example the serving point 120 involved in UL COMP operation as shown in FIG. 1, in one embodiment. Alternatively or additionally, the apparatus 1000 may also be embodied in/as any suitable network device, for example, a base station in a wireless system where UL COMP technique is not exploited. The apparatus 1000 is operable to carry out the example method 800 described with reference to FIG. 8 and possibly any other processes or methods. It is also to be understood that the method 800 is not necessarily carried out by the apparatus 1000. At least some steps of the method 800 can be performed by one or more other entities.

Particularly, as illustrated in FIG. 10, the apparatus 1000 comprises a first receiving module 1010 configured to receive a sequence of signals and a plurality of indicators via a transport network from a second device, wherein the sequence of signals is separated into a plurality of subsets of the sequence of signals, and each of the plurality of indicators indicates explicitly a start position within the sequence of signals for each of the plurality of subsets, and wherein the sequence of signals comprises a signal of a first type and a signal of a second type.

The signal of the first type may comprise, but not limited to, a reference signal (RS), in one embodiment. The RS may be used for at least one of channel estimation, interference estimation, noise estimation and SINR estimation, in one embodiment. For example, the signal of the first type may comprise demodulation reference signal (DMRS) shown in FIG. 2. The signal of the second type may comprise, but not limited to, a data signal, in one embodiment. It will be appreciated that the signal of the first type and the signal of the second type may be any suitable signal type in other embodiments, wherein the signal of the first type has a higher priority to be processed than that of the signal of the second type. For example the signal of the first type can be a control signal, which has to be detected before demodulating a data signal. In one embodiment, each of the plurality of subsets may be received by the first receiving module 1010 in a separate data unit suitable for transmission via the transport network. For example, the data unit can be, but not limited to, a MAC PDU, and each of the plurality of subsets may be received as the payload of the MAC PDU.

Each of the plurality of subsets may comprise a subset of the signal of the first type or a subset of the signal of the second type, in an embodiment. In another embodiment, one of the plurality of subsets may comprise both the signal of the first type and the signal of the second type.

It will be appreciated that the indicator can indicate the start position of the subset within the sequence of signals in any suitable manner, as described with reference to method 400 and 800, and thus will not be detailed here.

The apparatus 1000 further comprises a determination module 1020 configured to determine a signal type for each of the plurality of subsets based on a corresponding indicator of the plurality of indicators; and a processing module 1030 configured to process each of the plurality of subsets according to the signal type determined in the determination module 1020. With this implementation, the apparatus 1000 can process the signal type required to be processed first with a higher priority than other signal types, thereby reducing processing delay. For example, reference signals can be processed as early as possible by the apparatus 1000 to derive channel state information which is to be used for data signals demodulation, such that the processing delay of data signals can be reduced.

In another embodiment, the process module 1030 can be configured to process the subset comprising a signal of the first type, followed by processing the subset comprising a signal of the second type. Additionally or additionally, the process module 1030 can be configured to process the subset determined to be the first type, and then determine whether to process the subset determined to be the second type based on the processing results of the subset determined to be the first type.

In still another embodiment, the apparatus 100 may further comprise a second receiving module 1001 configured to receive the sequence of signals from a third device; and wherein the processing module 1030 may be configured to process the subset determined to be the second type jointly with the sequence of signals received from the third device.

The above modules may be configured to implement corresponding operations or steps as described with reference to FIG. 8 and thus will not be detailed herein for the conciseness purpose.

Although the operations of methods 400 and 800 are illustrated in Figs. 4-8 in a specific order, a person skilled in the art shall understand that some operations may be performed in a reverse order or in parallel. For example, the operations in blocks 421 and 422 of FIG. 4B may be performed in a reverse order. Therefore, the order as specified in the figures is merely illustrative instead of limiting.

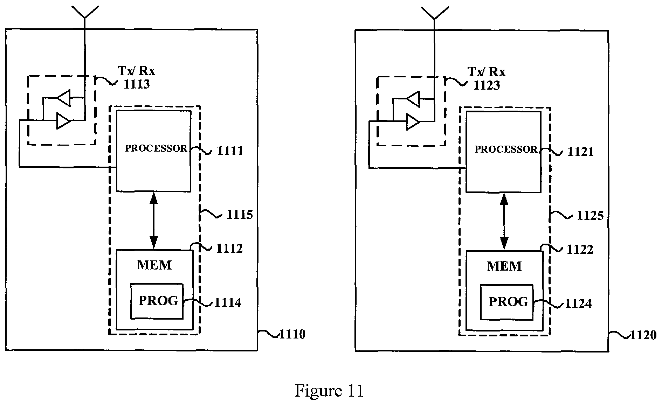

FIG. 11 illustrates a simplified block diagram of an apparatus 1110 that may be embodied in/as a base station, e.g., the assistant point 110 shown in FIG. 1, and an apparatus 1120 that may be embodied in/as a base station, e.g., the serving point 120 shown in FIG. 1.

The apparatus 1110 comprises at least one processor 1111, such as a data processor (DP) and at least one memory (MEM) 1112 coupled to the processor 1111. The apparatus 1110 may further comprise a transmitter TX and receiver RX 1113 coupled to the processor 1111. The MEM 1112 stores a program (PROG) 1114. The PROG 1114 may include instructions that, when executed on the associated processor 1111, enable the apparatus 1110 to operate in accordance with the embodiments of the present disclosure, for example to perform the method 400. A combination of the at least one processor 1111 and the at least one MEM 1112 may form processing means 1115 adapted to implement various embodiments of the present disclosure.

The apparatus 1120 comprises at least one processor 1121, such as a DP, and at least one MEM 1122 coupled to the processor 1121. The apparatus 1120 may further comprise a suitable TX/ RX 1123 coupled to the processor 1121. The MEM 1122 stores a PROG 1124. The PROG 1124 may include instructions that, when executed on the associated processor 1121, enable the apparatus 1120 to operate in accordance with the embodiments of the present disclosure, for example to perform the method 800. A combination of the at least one processor 1121 and the at least one MEM 1122 may form processing means 1125 adapted to implement various embodiments of the present disclosure.

Various embodiments of the present disclosure may be implemented by computer program executable by one or more of the processors 1111 and 1121, software, firmware, hardware or in a combination thereof.

The MEMs 1112 and 1122 may be of any type suitable to the local technical environment and may be implemented using any suitable data storage technology, such as semiconductor based memory devices, magnetic memory devices and systems, optical memory devices and systems, fixed memory and removable memory, as non-limiting examples.

The processors 1111 and 1121 may be of any type suitable to the local technical environment, and may include one or more of general purpose computers, special purpose computers, microprocessors, digital signal processors DSPs and processors based on multicore processor architecture, as non-limiting examples.

Although the above description is made in the context of a cellular network, it should not be construed as limiting the spirit and scope of the present disclosure. The principle and concept of the present disclosure may be more generally applicable to other radio networks, for example an ad-hoc network.

Furthermore, though some embodiments of the disclosure are described in a UL COMP scenario, it should not be construed as limiting the spirit and scope of the present disclosure. The principle and concept of the present disclosure may be more generally applicable to other wireless communication scenarios where UL COMP may not be exploited, to reduce processing delay.

In addition, the present disclosure may also provide a carrier containing the computer program as mentioned above, wherein the carrier is one of an electronic signal, optical signal, radio signal, or computer readable storage medium. The computer readable storage medium can be, for example, an optical compact disk or an electronic memory device like a RAM (random access memory), a ROM (read only memory), Flash memory, magnetic tape, CD-ROM, DVD, Blue-ray disc and the like.

The techniques described herein may be implemented by various means so that an apparatus implementing one or more functions of a corresponding apparatus described with an embodiment comprises not only prior art means, but also means for implementing the one or more functions of the corresponding apparatus described with the embodiment and it may comprise separate means for each separate function, or means that may be configured to perform two or more functions. For example, these techniques may be implemented in hardware (one or more apparatuses), firmware (one or more apparatuses), software (one or more modules), or combinations thereof. For a firmware or software, implementation may be made through modules (e.g., procedures, functions, and so on) that perform the functions described herein.

Exemplary embodiments herein have been described above with reference to block diagrams and flowchart illustrations of methods and apparatuses. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus to produce a machine, such that the instructions which execute on the

While this specification contains many specific implementation details, these should not be construed as limitations on the scope of any implementation or of what may be claimed, but rather as descriptions of features that may be specific to particular embodiments of particular implementations. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

It will be obvious to a person skilled in the art that, as the technology advances, the inventive concept can be implemented in various ways. The above described embodiments are given for describing rather than limiting the disclosure, and it is to be understood that modifications and variations may be resorted to without departing from the scope of the disclosure as those skilled in the art readily understand. Such modifications and variations are considered to be within the scope of the disclosure and the appended claims. The protection scope of the disclosure is defined by the accompanying claims.

## Claims

1. A method (400) implemented in a first device (110, 900) for wireless communication, comprising:
receiving (410) a sequence of signals from a second device (120), the sequence of signals comprising a signal of a first type and a signal of a second type;
assigning (420) a first priority to the signal of the first type and a second priority lower than the first priority to the signal of the second type; and
generating (421) an indicator for explicitly indicating a start position of a subset of the sequence of signals within the sequence of signals, and
transmitting (430) the indicator together with the subset of the sequence of signals via a transport network (140) to a third device (130, 1000) according to the assigned priorities,
wherein the signal of the first type comprises a demodulation reference signal,DMRS, and the signal of the second type comprises a data signal, and
wherein the first device (110, 900) is an assistant point, assisting a serving point, and the second device (120) is a serving point, serving user equipment.

2. The method according to Claim 1, wherein the sequence of signals comprises a sequence of bits contained in a subframe, and wherein said assigning (420) a first priority to the signal of the first type and a second priority lower than the first priority to the signal of the second type comprises:
buffering (421) bits corresponding to the signal of the first type in a queue with the first priority;
buffering (422) bits corresponding to the signal of the second type in a queue with the second priority; and
wherein said transmitting (430) the sequence of signals via a transport network (140) to a third device (130, 1000) according to the assigned priorities comprises:
transmitting the buffered bits via the transport network (140) to the third device (130, 1000) according to the priority of the queue where they are buffered.

3. The method according to Claim 2, wherein said transmitting the buffered bits via the transport network (140) to the third device (130, 1000) according to the priority of the queue where they are buffered comprises:
upon buffering a predetermined number of bits corresponding to the signal of the first type in the queue with the first priority,
stopping transmitting the bits buffered in the queue with the second priority,
generating a first data unit suitable for transmission via the transport network (140) based on at least the bits buffered in the queue with the first priority, and
transmitting the first data unit via the transport network (140) to the third device (130, 1000);
and/or,
upon completing transmitting the bits buffered in the queue with the first priority,
generating a second data unit suitable for transmission via the transport network (140) based on at least the bits buffered in the queue with the second priority, and
transmitting the second data unit via the transport network to the third device (130, 1000).

4. The method according to Claim 3, wherein the subset of the sequence of signals comprises a subset of the signal of the first type or a subset of the signal of the second type.

5. The method according to any of Claims 1 to 3, wherein the first device (110, 900), the second device (120) and the third device (130, 1000) are an assistant point, a terminal device and a serving point involved in a uplink coordinated multi-point,UL COMP operation, respectively.

6. An apparatus (900) in a first device (110) adapted for wireless communication, comprising:
a receiving module (910), configured to receive a sequence of signals transmitted from a second device (120), the sequence of signals comprising a signal of a first type and a signal of a second type;
a priority assigning module (920), configured to assign a first priority to the signal of the first type and a second priority lower than the first priority to the signal of the second type;
an indicator generation module (921), configured to generate an indicator for explicitly indicating a start position of a subset of the sequence of signals within the sequence of signals; and
a transmitting module (930), configured to transmit the indicator generated in the indicator generation module (921) together with the subset of the sequence of signals via a transport network (140) to a third device (130, 1000) according to the assigned priorities,
wherein the signal of the first type comprises a demodulation reference signal (DMRS), and the signal of the second type comprises a data signal, and
wherein the first device (110, 900) is an assistant point, assisting a serving point, and the second device (120) is a serving point, serving user equipment.

7. The apparatus according to Claim 6, wherein the signals of the first type comprise a reference signal, and the signal of the second type comprises a data signal.

8. The apparatus according to Claim 6, wherein the sequence of signals comprises a sequence of bits contained in a subframe, and wherein said priority assigning module (920) is configured to:
buffering (421) bits corresponding to the signal of the first type in a queue with the first priority;
buffering (422) bits corresponding to the signal of the second type in a queue with the second priority; and
wherein said transmitting module (930) configured to transmit the buffered bits via the transport network (140) to the third device (130, 1000) according to the priority of the queue where they are buffered.

9. A computer program (1114), comprising instructions which, when executed on at least one processor, cause the at least one processor to carry out the method according to any one of claims 1 to 5.

## Patentansprüche

1. Verfahren (400), das in einer ersten Vorrichtung (110, 900) für drahtlose Kommunikation implementiert ist, umfassend:
Empfangen (410) einer Signalfolge von einer zweiten Vorrichtung (120), wobei die Signalfolge ein Signal eines ersten Typs und ein Signal eines zweiten Typs umfasst;
Zuweisen (420) einer ersten Priorität an das Signal des ersten Typs und einer zweiten Priorität, die niedriger als die erste Priorität ist, an das Signal des zweiten Typs; und
Erzeugen (421) eines Indikators zum expliziten Angeben einer Startposition einer Teilmenge der Signalfolge innerhalb der Signalfolge, und
Übertragen (430) des Indikators zusammen mit der Teilmenge der Signalfolge über ein Transportnetzwerk (140) an eine dritte Vorrichtung (130, 1000) gemäß den zugewiesenen Prioritäten,
wobei das Signal des ersten Typs ein Demodulationsreferenzsignal, DMRS, und das Signal des zweiten Typs ein Datensignal umfasst, und
wobei die erste Vorrichtung (110, 900) ein Hilfspunkt ist, der einen Bedienungspunkt unterstützt, und die zweite Vorrichtung (120) ein Bedienungspunkt ist, der eine Benutzereinrichtung bedient.

2. Verfahren nach Anspruch 1, wobei die Signalfolge eine Bitfolge umfasst, die in einem Unterrahmen enthalten sind, und wobei das Zuweisen (420) einer ersten Priorität an das Signal des ersten Typs und einer zweiten Priorität, die niedriger ist als die erste Priorität, an das Signal des zweiten Typs umfasst:
Zwischenspeichern (421) von Bits, die dem Signal des ersten Typs in einer Warteschlange mit der ersten Priorität entsprechen;
Zwischenspeichern (422) von Bits, die dem Signal des zweiten Typs in einer Warteschlange mit der zweiten Priorität entsprechen; und
wobei das Übertragen (430) der Signalfolge über ein Transportnetzwerk (140) zu einer dritten Vorrichtung (130, 1000) gemäß den zugewiesenen Prioritäten umfasst:
Übertragen der zwischengespeicherten Bits über das Transportnetzwerk (140) an die dritte Vorrichtung (130, 1000) gemäß der Priorität der Warteschlange, wo sie zwischengespeichert werden.

3. Verfahren nach Anspruch 2, wobei das Übertragen der zwischengespeicherten Bits über das Transportnetzwerk (140) an die dritte Vorrichtung (130, 1000) entsprechend der Priorität der Warteschlange, in der sie zwischengespeichert werden, umfasst:
beim Zwischenspeichern einer vorbestimmten Anzahl von Bits, die dem Signal des ersten Typs in der Warteschlange mit der ersten Priorität entspricht,
Anhalten des Übertragens der in der Warteschlange zwischengespeicherten Bits mit der zweiten Priorität,
Erzeugen einer ersten Dateneinheit, die zur Übertragung über das Transportnetzwerk (140) geeignet ist, basierend auf mindestens den in der Warteschlange mit der ersten Priorität zwischengespeicherten Bits, und
Übertragen der ersten Dateneinheit über das Transportnetzwerk (140) an die dritte Vorrichtung (130, 1000); und/oder nach Abschluss des Übertragens der in der Warteschlange zwischengespeicherten Bits mit der ersten Priorität,
Erzeugen einer zweiten Dateneinheit, die zur Übertragung über das Transportnetzwerk (140) geeignet ist, basierend auf mindestens den in der Warteschlange mit der zweiten Priorität zwischengespeicherten Bits, und
Übertragen der zweiten Dateneinheit über das Transportnetzwerk an die dritte Vorrichtung (130, 1000).

4. Verfahren nach Anspruch 3, wobei die Teilmenge der Signalfolge eine Teilmenge des Signals des ersten Typs oder eine Teilmenge des Signals des zweiten Typs umfasst.

5. Verfahren nach einem der Ansprüche 1 bis 3, wobei die erste Vorrichtung (110, 900), die zweite Vorrichtung (120) und die dritte Vorrichtung (130, 1000) ein Assistenzpunkt, eine Endvorrichtung und ein Bedienungspunkt sind, die jeweils an einem Uplink-koordinierten Mehrpunkt-,UL COMP-Vorgang beteiligt sind.

6. Vorrichtung (900) in einer ersten Vorrichtung (110), die für drahtlose Kommunikation angepasst ist, umfassend:
ein Empfangsmodul (910), das so konfiguriert ist, dass es eine Signalfolge empfängt, die von einer zweiten Vorrichtung (120) übertragen wird, wobei die Signalfolge ein Signal eines ersten Typs und ein Signal eines zweiten Typs umfasst;
ein Prioritätszuweisungsmodul (920), das so konfiguriert ist, dass es dem Signal des ersten Typs eine erste Priorität und dem Signal des zweiten Typs eine zweite Priorität, die niedriger ist als die erste Priorität, zuweist;
ein Indikatorerzeugungsmodul (921), das so konfiguriert ist, dass es einen Indikator zum expliziten Angeben einer Startposition einer Untermenge der Signalfolge innerhalb der Signalfolge erzeugt; und
ein Übertragungsmodul (930), das so konfiguriert ist, dass es den im Indikatorerzeugungsmodul (921) erzeugten Indikator zusammen mit der Teilmenge der Signalfolge über ein Transportnetzwerk (140) an eine dritte Vorrichtung (130, 1000) gemäß den zugewiesenen Prioritäten überträgt,
wobei das Signal des ersten Typs ein Demodulationsreferenzsignal (DMRS) umfasst und das Signal des zweiten Typs ein Datensignal umfasst, und
wobei die erste Vorrichtung (110, 900) ein Hilfspunkt ist, der einen Bedienungspunkt unterstützt, und die zweite Vorrichtung (120) ein Bedienungspunkt ist, der eine Benutzereinrichtung bedient.

7. Vorrichtung nach Anspruch 6, wobei die Signale des ersten Typs ein Referenzsignal umfassen und das Signal des zweiten Typs ein Datensignal umfasst.

8. Vorrichtung nach Anspruch 6, wobei die Signalfolge eine Bitfolge umfasst, die in einem Unterrahmen enthalten sind, und wobei das Prioritätszuweisungsmodul (920) konfiguriert ist zum:
Zwischenspeichern (421) von Bits, die dem Signal des ersten Typs in einer Warteschlange mit der ersten Priorität entsprechen;
Zwischenspeichern (422) von Bits, die dem Signal des zweiten Typs in einer Warteschlange mit der zweiten Priorität entsprechen; und
wobei das Übertragungsmodul (930) so konfiguriert ist, dass es die zwischengespeicherten Bits über das Transportnetzwerk (140) an die dritte Vorrichtung (130, 1000) gemäß der Priorität der Warteschlange überträgt, wo sie zwischengespeichert werden.

9. Computerprogramm (1114), das Anweisungen umfasst, die bei Ausführung auf mindestens einem Prozessor bewirken, dass der mindestens eine Prozessor das Verfahren nach einem der Ansprüche 1 bis 5 ausführt.

## Revendications

1. Procédé (400) implémenté dans un premier dispositif (110, 900) pour communication sans fil, comprenant :
la réception (410) d'une séquence de signaux depuis un deuxième dispositif (120), la séquence de signaux comprenant un signal d'un premier type et un signal d'un deuxième type ;
l'attribution (420) d'une première priorité au signal du premier type et d'une deuxième priorité inférieure à la première priorité au signal du deuxième type ; et
la génération (421) d'un indicateur pour indiquer explicitement une position de départ d'un sous-ensemble de la séquence de signaux au sein de la séquence de signaux, et
la transmission (430) de l'indicateur conjointement avec le sous-ensemble de la séquence de signaux via un réseau de transport (140) vers un troisième dispositif (130, 1000) selon les priorités attribuées,
dans lequel le signal du premier type comprend un signal de référence de démodulation, DMRS, et le signal du deuxième type comprend un signal de données, et
dans lequel le premier dispositif (110, 900) est un point d'assistant, fournissant une assistance à un point de desserte, et le deuxième dispositif (120) est un point de desserte, desservant un équipement utilisateur.

2. Procédé selon la revendication 1, dans lequel la séquence de signaux comprend une séquence de bits contenue dans une sous-trame, et dans lequel ladite attribution (420) d'une première priorité au signal du premier type et d'une deuxième priorité inférieure à la première priorité au signal du deuxième type comprend :
la mise en tampon (421) de bits correspondant au signal du premier type dans une file d'attente avec la première priorité ;
la mise en tampon (422) de bits correspondant au signal du deuxième type dans une file d'attente avec la deuxième priorité ; et
dans lequel ladite transmission (430) de la séquence de signaux via un réseau de transport (140) vers un troisième dispositif (130, 1000) selon les priorités attribuées comprend : la transmission des bits mis en tampon via le réseau de transport (140) vers le troisième dispositif (130, 1000) selon la priorité de la file d'attente où ils sont mis en tampon.

3. Procédé selon la revendication 2, dans lequel ladite transmission des bits mis en tampon via le réseau de transport (140) vers le troisième dispositif (130, 1000) selon la priorité de la file d'attente où ils sont mis en tampon comprend :
lors de la mise en tampon d'un nombre prédéterminé de bits correspondant au signal du premier type dans la file d'attente avec la première priorité,
l'arrêt de la transmission des bits mis en tampon dans la file d'attente avec la deuxième priorité,
la génération d'une première unité de données appropriée pour transmission via le réseau de transport (140) sur la base au moins des bits mis en tampon dans la file d'attente avec la première priorité, et
la transmission de la première unité de données via le réseau de transport (140) vers le troisième dispositif (130, 1000) ; et/ou,
à l'achèvement de la transmission des bits mis en tampon dans la file d'attente avec la première priorité,
la génération d'une deuxième unité de données appropriée pour transmission via le réseau de transport (140) sur la base au moins des bits mis en tampon dans la file d'attente avec la deuxième priorité, et
la transmission de la deuxième unité de données via le réseau de transport vers le troisième dispositif (130, 1000).

4. Procédé selon la revendication 3, dans lequel le sous-ensemble de la séquence de signaux comprend un sous-ensemble du signal du premier type ou un sous-ensemble du signal du deuxième type.

5. Procédé selon l'une quelconque des revendications 1 à 3, dans lequel le premier dispositif (110, 900), le deuxième dispositif (120) et le troisième dispositif (130, 1000) sont un point d'assistant, un dispositif terminal et un point de desserte impliqué dans une opération multipoint coordonnée de liaison montante, UL COMP, respectivement.

6. Appareil (900) dans un premier dispositif (110) conçu pour une communication sans fil, comprenant :
un module de réception (910), configuré pour recevoir une séquence de signaux transmise depuis un deuxième dispositif (120), la séquence de signaux comprenant un signal d'un premier type et un signal d'un deuxième type ;
un module d'attribution de priorité (920), configuré pour attribuer une première priorité au signal du premier type et une deuxième priorité inférieure à la première priorité au signal du deuxième type ;
un module générateur d'indicateur (921), configuré pour générer un indicateur pour indiquer explicitement une position de départ d'un sous-ensemble de la séquence de signaux au sein de la séquence de signaux ; et
un module de transmission (930), configuré pour transmettre l'indicateur généré dans le module générateur d'indicateur (921) conjointement avec le sous-ensemble de la séquence de signaux via un réseau de transport (140) vers un troisième dispositif (130, 1000) selon les priorités attribuées,
dans lequel le signal du premier type comprend un signal de référence de démodulation (DMRS), et le signal du deuxième type comprend un signal de données, et
dans lequel le premier dispositif (110, 900) est un point d'assistant, fournissant une assistance à un point de desserte, et le deuxième dispositif (120) est un point de desserte, desservant un équipement utilisateur.

7. Appareil selon la revendication 6, dans lequel les signaux du premier type comprennent un signal de référence, et le signal du deuxième type comprend un signal de données.

8. Appareil selon la revendication 6, dans lequel la séquence de signaux comprend une séquence de bits contenue dans une sous-trame, et dans lequel ledit module d'attribution de priorité (920) est configuré pour :
la mise en tampon (421) de bits correspondant au signal du premier type dans une file d'attente avec la première priorité ;
la mise en tampon (422) de bits correspondant au signal du deuxième type dans une file d'attente avec la deuxième priorité ; et
dans lequel ledit module de transmission (930) est configuré pour transmettre les bits mis en tampon via le réseau de transport (140) vers le troisième dispositif (130, 1000) selon la priorité de la file d'attente où ils sont mis en tampon.

9. Programme informatique (1114), comprenant des instructions qui, lorsqu'elles sont exécutées sur au moins un processeur, amènent l'au moins un processeur à effectuer le procédé selon l'une quelconque des revendications 1 à 5.
